# EUROPÄISCHE PATENTSCHRIFT

(11) **EP 3 988 197 B1**
(45) Veröffentlichungstag und Bekanntmachung des Hinweises auf die Patenterteilung: **07.06.2023**
(21) Anmeldenummer: 21201686.9
(22) Anmeldetag: 08.10.2021
(51) Int. Cl.: B01D 29/21, B01D 46/24, B01D 46/52

(54) **RINGFILTERELEMENT UND ZUGEHÖRIGES HERSTELLUNGSVERFAHREN SOWIE GEEIGNETE FILTEREINRICHTUNG**
RING FILTER ELEMENT AND CORRESPONDING MANUFACTURING METHOD AND SUITABLE FILTER DEVICE
ÉLÉMENT FILTRANT ANNULAIRE ET PROCÉDÉ DE FABRICATION ASSOCIÉ, AINSI QUE DISPOSITIF FILTRANT CORRESPONDANT

(30) Priorität: 23.10.2020 DE 102020213388
(43) Veröffentlichungstag der Anmeldung: 27.04.2022
(73) Patentinhaber: Filtration Group GmbH, 74613 Öhringen (DE)
(72) Erfinder: GAUGLER, Thomas, 74613 Öhringen (DE); LAIDIG, Gerhard, 71543 Wüstenrot-Berg (DE)
(74) Vertreter: BRP Renaud & Partner mbB Rechtsanwälte Patentanwälte Steuerberater

(56) Entgegenhaltungen:
- EP-A1- 0 883 429
- EP-A1- 3 854 468
- DE-B- 1 253 236

## Beschreibung

Die vorliegende Erfindung betrifft ein Ringfilterelement zum Filtern eines flüssigen oder gasförmigen Mediums gemäß dem Oberbegriff des Anspruchs 1. Die Erfindung betrifft außerdem ein Verfahren zum Herstellen eines derartigen Ringfilterelements. Schließlich betrifft die vorliegende Erfindung noch eine Filtereinrichtung, die mit einem derartigen Ringfilterelement ausgestattet ist.

Ein herkömmliches Ringfilterelement ist beispielsweise aus der US 9 868 083 B2 bekannt und weist einen ringförmigen Filterkörper aus einem sternförmig gefalteten Filtermaterial auf, der vom Medium durchströmbar ist. Ferner weist das Ringfilterelement eine ringförmige, in Umfangsrichtung geschlossene Innenzarge aus einem Stützmaterial auf, die konzentrisch im Filterkörper angeordnet ist und die ebenfalls vom Medium durchströmbar ist. Die Filtrationsfunktion wird bei einem derartigen Ringfilterelement vom Filterkörper wahrgenommen, also nicht von der Innenzarge. Die Innenzarge stützt den Filterkörper radial innen ab und stabilisiert dadurch das Ringfilterelement, wenn dieses im Filtrationsbetrieb radial von außen nach innen von zu reinigendem Medium durchströmt wird. Für diese Stützfunktion liegt der Filterkörper zumindest während des Filtrationsbetriebs mit seiner radial innenliegenden Körperinnenseite radial an einer radial außenliegenden, zylindrischen Zargenaußenseite an.

Während des Filtrationsbetriebs lagern sich Verunreinigungen an der außenliegenden Anströmseite des Filterkörpers an und erhöhen im Laufe der Zeit den Durchströmungswiderstand des Filterkörpers. Für eine erhöhte Standzeit des Filterelements ist es z.B. aus der vorstehend genannten US 9 868 083 B2 bekannt, einen Rückspülvorgang durchzuführen, bei dem beispielsweise gefiltertes Medium in umgekehrter Strömungsrichtung, also radial von innen nach außen den Filterkörper durchströmt. Ein derartiger Regenerationsvorgang kann dabei mit erhöhtem Druck und/oder gepulst durchgeführt werden. Ohne zusätzliche Schutzmaßnahmen würde das Filtermaterial bei einem derartigen Rückspülvorgang von der Innenzarge abheben, was insbesondere bei gepulsten Rückspülungen unter erhöhtem Druck zu einem starken Verschleiß des Filterkörpers führen kann. Zur Vermeidung eines derartigen Verschleißes ist es bei dem aus der vorstehend genannten US 9 868 083 B2 bekannten Ringfilterelement bekannt, an der radial außenliegenden Körperaußenseite mehrere Stützringe am Filterkörper anzuordnen, die den Filterkörper an der Innenzarge anliegend in Position halten. Die Stützringe sind dabei mittels eines Klebstoffs am Filterkörper befestigt.

Bei bestimmten Filtrationsaufgaben kann es unerwünscht sein, derartige Stützringe zu verwenden. Beispielsweise kann das Medium ein Produkt transportieren, das mit Hilfe des Ringfilterelements aus dem Mediumstrom abgeschieden wird, um es einer weiteren Verwendung zuführen zu können. Das gewünschte Produkt fällt somit an der Anströmseite, also an der Rohseite des Filterkörpers an. Durch Alterungsprozesse und aufgrund der hohen mechanischen Belastung können Partikel der Stützringe in das Produkt gelangen. Insbesondere im Rahmen der Lebensmittelproduktion, beispielsweise bei der Herstellung von Mehl, oder auch bei der Produktion von Medikamenten ist eine Beimengung von Partikeln solcher Stützringe zum gewünschten Produkt zu vermeiden. Auch ist die Verwendung von Klebstoffen auf der Rohseite unerwünscht, um eine Kontamination des Produkts mit Klebstoffpartikeln zu vermeiden.

Ein gattungsgemäßes Ringfilterelement ist aus der WO 97/31695 A1 bekannt und unterscheidet sich vom vorstehend genannten herkömmlichen Ringfilterelement dadurch, dass mehrere ringförmige Halter in Form von Klebebändern vorgesehen sind, die um die Innenzarge umlaufen und mit der Körperinnenseite des Filterkörpers verklebt sind.

Ein weiteres Ringfilterelement mit einem Klebestreifen zwischen dem Filterkörper und der Innenzarge ist aus der DE 12 53 236 B bekannt.

Aus der EP 3 854 468 A1 ist ein Ringfilterelement bekannt, bei dem der Filterkörper an seiner Körperinnenseite mittels eines ausgehärteten Schaumkörpers aus einem Expansionsmaterial an der Innenzarge festgelegt ist.

Aus der GB 1 255 894 A ist ein anderes Ringfilterelement bekannt, dessen Innenzarge einen Längsspalt aufweist, also in Umfangsrichtung nicht geschlossen ist. Diese Innenzarge weist an ihrer Zargenaußenseite eine Vielzahl radial abstehender Längsstege auf, die in der Umfangsrichtung verteilt sind und zwischen denen Kanäle ausgebildet sind, an deren Grund Öffnungen ausgebildet sind, durch die hindurch die Innenzarge vom Medium durchströmbar ist. Bei diesem Ringfilterelement ist der Filterkörper als einseitig geschlossener Schlauch aus einem ungefalteten Filtermaterial ausgestaltet, der auf die Innenzarge aufgezogen ist. Der Filterkörper kann an den radial freistehenden Enden der Längsstege mittels eines Klebstoffs befestigt sein.

Aus der US 5 669 949 A ist ein Filterelement bekannt, dessen ringförmiger Filterkörper an seiner radialen Innenseite mit mehreren Stützbändern stabilisiert ist, die mit der Innenseite des Filterkörpers verklebt sind. Das Filterelement ist zur Montage in einem Filtergehäuse auf einen Trägerkern des Filtergehäuses aufsteckbar und zur Demontage davon abziehbar.

Die vorliegende Erfindung beschäftigt sich mit dem Problem, für ein Ringfilterelement bzw. für ein zugehöriges Verfahren bzw. für eine zugehörige Filtereinrichtung eine verbesserte Ausführungsform anzugeben, welche die vorstehend genannten Nachteile vermeidet. Insbesondere soll die Gefahr einer Kontamination eines mit Hilfe des Ringfilterelements aus einem Mediumstrom herausgefilterten Produkts reduziert werden.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, radial zwischen der Innenzarge und dem Filterkörper zumindest einen Halter anzuordnen, der einen Klebstoffkörper aus einem Klebstoff aufweist. Der jeweilige Halter umgreift dabei die Innenzarge ringförmig oder spiralförmig. Während der Herstellung des Ringfilterelements ist der Klebstoff des Klebstoffkörpers zunächst nicht aktiviert, wodurch es für die Montage des Ringfilterelements leicht möglich ist, zunächst einen oder auch mehrere Halter an der Zargenaußenseite anzubringen und anschließend die Innenzarge und den Filterkörper koaxial ineinander zu stecken. Anschließend wird der Klebstoff auf geeignete Weise aktiviert, so dass er aushärtet und sich zumindest mit dem Filtermaterial fest verbindet. Im ausgehärteten Zustand des Klebstoffs ist der Halter radial innen an der Innenzarge direkt und/oder indirekt radial gehalten und radial außen mittels des Klebstoffkörpers mit dem Filterkörper fest verbunden. Hierdurch wird mit Hilfe des Halters der Filterkörper radial an der Innenzarge festgelegt, so dass der Filterkörper auch bei einer Durchströmung von radial innen nach außen, also insbesondere bei einer Rückspülung nicht von der Innenzarge abheben kann. Hierdurch wird die mechanische Belastung des Filtermaterials während solcher Regenerationsvorgänge reduziert. Während des Filtrationsbetriebs befindet sich der jeweilige Halter, insbesondere dessen Klebstoffkörper, auf der Abströmseite des Filterkörpers, während sich das aus dem Medium abzuscheidende Produkt an der Anströmseite des Filterkörpers anlagert. Hierdurch wird eine Kontamination des sich während des Filtrationsbetriebs am Filterkörper anlagernden Produkts mit Partikeln des Halters, insbesondere des Klebstoffkörpers, vermieden.

Der Halter ist bevorzugt unmittelbar an der Innenzarge radial gehalten. Dies kann schon dadurch realisiert sein, dass der ringförmige oder spiralförmige Halter die Innenzarge umgreift und dadurch formschlüssig an der Innenzarge radial gehalten ist. Grundsätzlich kann der Halter in axialer Richtung lose an der Innenzarge angeordnet sein, so dass der Halter als solches entlang der Innenzarge axial verschiebbar ist. Alternativ kann der Halter jedoch auch an der Innenzarge befestigt sein, so dass er weder radial noch axial zur Innenzarge beweglich ist. Dies kann beispielsweise dadurch erfolgen, dass der Halter durch den Klebstoff des Klebstoffkörpers mit der Innenzarge verklebt ist. Insbesondere kann der Halter dann durch den Klebstoffkörper gebildet sein oder daraus bestehen.

Erfindungsgemäß weist der Halter wenigstens eine die Innenzarge umgreifende ringförmige oder spiralförmige Armierung auf, die radial außen durch den Klebstoff des Klebstoffkörpers direkt mit dem Klebstoffkörper verklebt ist. Die Armierung verstärkt den Halter und kann hohe Kräfte aufnehmen. Die Armierung ist vom Klebstoffkörper verschieden, so dass der Halter zumindest zwei Bestandteile aufweist, nämlich den Klebstoffkörper und die Armierung. Die Armierung kann aus Kunststoff oder aus Metall bestehen. Die Armierung kann radial außen durch den Klebstoff mit dem Klebstoffkörper fest verbunden sein. Ebenso kann die Armierung in den Klebstoff des Klebstoffkörpers eingebettet sein, also vom Klebstoff durchdrungen sein.

Erfindungsgemäß weist die Armierung eine Gitterstruktur auf, die vom Klebstoff des Klebstoffkörpers durchsetzt ist, so dass der Klebstoffkörper radial innen durch den Klebstoff des Klebstoffkörpers und durch die Armierung hindurch direkt mit der Innenzarge verklebt ist. Damit ist der Halter durch den Klebstoffkörper radial innen mit der Innenzarge und radial außen mit dem Filterkörper verklebt, während er in seinem Inneren, also radial zwischen der Innenzarge und dem Filterkörper durch die Armierung verstärkt ist.

Besonders vorteilhaft ist eine Ausgestaltung, bei der die Armierung an der Innenzarge unabhängig vom Klebstoff direkt befestigt ist. Dies kann beispielsweise durch wenigstens eine Schweißverbindung oder Lötverbindung oder durch wenigstens ein anderes mechanisches Befestigungselement erfolgen, wie z.B. ein Clip oder eine Klammer. Hierdurch lässt sich die Montage des Ringfilterelements vereinfachen, da der Halter mittels der an der Innenzarge fixierten Armierung an der Innenzarge axial fixierbar ist bevor der Klebstoff aktiviert ist. Beispielsweise lässt sich der Filterkörper leichter auf die Innenzarge mit Halter aufschieben solange der Klebstoff nicht aktiviert ist.

Insbesondere kann die Armierung mit einem Metallgitter oder durch ein Metallgitter gebildet sein. Hierdurch besitzt die Armierung eine hohe Festigkeit und lässt sich z.B. durch einen oder mehrere Schweißpunkte einfach an der dann vorzugsweise ebenfalls metallischen Innenzarge einfach befestigen.

Bevorzugt ist eine Ausführungsform, bei der sich der jeweilige Klebstoffkörper nur über einen Teil der axialen Länge der Innenzarge erstreckt, wobei sich die Armierung entweder über die gesamte axiale Länge der Innenzarge oder nur im Bereich des jeweiligen Klebstoffkörper über einen Teil der axialen Länge der Innenzarge erstreckt. Die Armierung kann für das zu filternde Medium durchlässig ausgestaltet sein. Der Klebstoffkörper ist dagegen für das Medium undurchlässig. Aufgrund einer geringen axialen Erstreckung des Klebstoffkörpers wird die Filtrationswirkung des Ringfilterelements durch die Anbringung des Halters nur geringfügig beeinträchtigt.

Zweckmäßig kann die Innenzarge eine Stützstruktur mit radialen Durchtrittsöffnungen aufweisen, die vom Medium durchströmbar sind. Der Klebstoff kann nun in einige dieser Durchtrittsöffnungen zumindest teilweise eindringen, diese insbesondere ausfüllen und/oder durchdringen. Hierdurch wird eine besonders effiziente Haftung durch Formschluss realisiert. Des Weiteren kann vorgesehen sein, dass der Klebstoff einige dieser Durchtrittsöffnungen radial durchdringt und die Stützstruktur hintergreift. Mit anderen Worten, der Klebstoff gelangt bis an eine radial innenliegende Zargeninnenseite und kann sich dort in Umfangsrichtung und in Axialrichtung über eine Begrenzung der Durchtrittsöffnungen hinaus ausbreiten und so die Stützstruktur formschlüssig hintergreifen. Der Klebstoff liegt dann auch an der Zargeninnenseite an. Hierdurch wird die Stützstruktur zumindest teilweise in den Klebstoff eingebettet. Die Haltekraft der Verbindung wird dadurch besonders groß. Dementsprechend kann der Klebstoffkörper bzw. der Klebstoff mittels Formschluss am Filterkörper befestigt sein.

Gemäß einer Weiterbildung kann der Klebstoff an der Körperinnenseite in das Filtermaterial eindringen, so dass dort das Filtermaterial in den Klebstoff eingebettet ist. Hierdurch ergibt sich eine besonders intensive Verbindung, die große Kräfte übertragen kann. Zweckmäßig dringt der Klebstoff nur so weit in das Filtermaterial ein, dass ein Abstand zur Filteraußenseite verbleibt. Insbesondere wird dadurch eine vollständige Durchdringung des Filtermaterials mit Klebstoff vermieden.

Gemäß einer anderen Ausführungsform kann das Ringfilterelement an seinen axialen Enden jeweils eine Endscheibe aufweisen, die den Filterkörper axial begrenzen und die an der Innenzarge und am Filterkörper befestigt sind. Die Endscheiben können aus Kunststoff oder Metall bestehen. Die Innenzarge kann aus Kunststoff oder Metall bestehen. Zweckmäßig bestehen die Endscheiben und die Innenzarge aus demselben Material. Das Filtermaterial ist zweckmäßig gefaltet. Das Filtermaterial kann mehrlagig sein.

Abhängig von der axialen Länge des Ringfilterelements und von der Druckbelastung des Ringfilterelements kann ein einziger Halter ausreichen. Ebenso sind Ausführungsformen denkbar, bei denen mehrere derartige Halter vorgesehen sind, die voneinander sowie von den axialen Enden des Filterkörpers und der Innenzarge axial beabstandet angeordnet sind.

Bevorzugt ist dabei eine Ausführungsform, bei welcher sich jeder Halter oder wenigstens einer der Halter in der Umfangsrichtung über wenigstens 360° erstreckt. Dadurch ist sichergestellt, dass die Körperinnenseite in der Umfangsrichtung geschlossen an der Zargenaußenseite festgelegt ist.

Zweckmäßig kann das Filtermaterial gefaltet sein, so dass benachbarte Falten jeweils durch einen Falz miteinander verbunden sind. Beim gefalteten Filtermaterial wird die Körperinnenseite durch die radial innenliegenden Falze gebildet. Bei einem gefalteten Filtermaterial kann vorteilhafterweise vorgesehen sein, dass sich jeder Halter oder wenigstens einer der Halter in der Umfangsrichtung erstreckt und mit allen radial innenliegenden Falzen fest verbunden ist. Auch diese Maßnahme sorgt dafür, dass die Körperinnenseite in der Umfangsrichtung geschlossen an der Zargenaußenseite festgelegt ist.

Besonders vorteilhaft ist eine Ausführungsform, bei welcher jeder oder wenigstens einer der Halter ringförmig oder ringsegmentförmig oder schraubenförmig oder schraubensegmentförmig ausgestaltet ist und sich in der Umfangsrichtung erstreckt. Insbesondere kann der jeweilige Halter somit auch einen Ring bilden, der z.B. als Kreis geformt sein kann, wenn er in einer senkrecht zur Längsmittelachse des Ringfilterelements verlaufenden Radialebene liegt, oder als Ellipse geformt sein kann, wenn er in einer gegenüber der Radialebene geneigten Ebene liegt.

Sofern der Klebstoff so konfiguriert ist, dass er auch bereits vor seiner Aktivierung eine gewisse Haftung besitzt, kann bei einer anderen Ausführungsform vorgesehen sein, dass der Halter zusätzlich zum Klebstoffkörper einen nichtklebenden Abdeckstreifen oder eine Antihaftbeschichtung aufweist, um den quasi selbstklebend ausgestalteten Klebstoffkörper vor der Aktivierung des Klebstoffs leicht manuell hantieren und an der Innenzarge montieren zu können. Ein solcher Abdeckstreifen kann vor dem Montieren des Filterkörpers entfernt werden. Eine solche Antihaftbeschichtung kann so ausgestaltet sein, dass sie durch die Aktivierung des Klebstoffs aufgelöst und/oder zerstört wird.

Ein erfindungsgemäßes Verfahren zum Herstellen eines derartigen Ringfilterelements charakterisiert sich dadurch, dass zunächst wenigstens ein Halter an der Zargenaußenseite festgelegt wird, wobei der Klebstoff noch nicht aktiviert ist. Anschließend werden der Filterkörper und die Innenzarge aneinander angeordnet, derart, dass anschließend die Körperinnenseite zumindest am jeweiligen Halter anliegt. Beispielsweise kann der Filterkörper auf die Innenzarge aufgeschoben werden. Ebenso ist denkbar, die Innenzarge in den Filterkörper einzuschieben. Durch die Elastizität des Filterkörpers und durch eine entsprechende Dimensionierung von Filterkörper und Innenzarge liegt die Körperinnenseite zweckmäßig auch außerhalb des Halters an der Zargenaußenseite an.

Anschließend wird der Klebstoff des jeweiligen Halters aktiviert, so dass der Klebstoff aushärtet und sich dadurch mit der Innenzarge und mit dem Filterkörper fest verbindet. Nach dem Aushärten bleibt der Klebstoff formstabil. Der ausgehärtete Klebstoff kann dabei gummielastisch sein oder aber vergleichsweise starr und steif sein. Das Aktivieren kann je nach Klebstoff thermisch oder induktiv oder mit einem Hilfsstoff erfolgen.

Erfindungsgemäß wird zumindest während der Aushärtung des Klebstoffs das Filtermaterial gegen die Innenzarge angedrückt. Hierdurch wird die gewünschte Positionierung zwischen Filterkörper und Innenzarge realisiert, in welcher die Körperinnenseite an der Zargenaußenseite anliegt, so dass das Filtermaterial unmittelbar an der Innenzarge abgestützt ist. Ferner wird durch das Andrücken vor und/oder während des Aushärtens erreicht, dass das Filtermaterial an der Körperinnenseite in den Klebstoffkörper eindringt, wenn dieser-je nach Klebstoff - vor Abschluss des Aushärtens nachgiebig und nach Art einer zähen Flüssigkeit verdrängbar ist. Somit kann der Klebstoff beispielsweise auch in die Armierung und/oder in die Stützstruktur der Innenzarge eindringen oder diese sogar durchdringen.

Bei einer bevorzugten Ausführungsform kann der Klebstoff ein Schmelzklebstoff bzw. ein Schmelzklebstoffsystem, insbesondere ein reaktiver Schmelzklebstoff, sein, also ein Schmelzklebstoff auf einer Basis aus Polyurethan (PUR). Diese Schmelzklebstoff-Systeme reagieren z. B. mit Feuchtigkeit des zu verklebenden Materiales oder der Umgebung, wie z. B. der Luft. Dabei findet nicht nur ein physikalischer Effekt durch Erstarrung des (zäh)flüssigen Klebstoffes statt, sondern zusätzlich ein chemisch reaktiver Effekt, welcher die Eigenschaften der Verklebung vielfach positiv beeinflusst. Hinsichtlich der Haftungseigenschaften oder der Wasser- und Temperaturbeständigkeit sind reaktive PUR Schmelzklebstoffe besonders vorteilhaft.

Eine erfindungsgemäße Filtereinrichtung zum Filtern eines flüssigen oder gasförmigen Mediums bzw. zum Herausfiltern eines Produkts aus einem Medium umfasst zumindest ein Ringfilterelement der vorstehend beschriebenen Art. Zweckmäßig können in der Filtereinrichtung mehrere derartige Ringfilterelemente vorgesehen sein, die insbesondere parallel vom jeweiligen Medium durchströmt werden. Hierzu kann die Filtereinrichtung für das jeweilige Ringfilterelement zumindest eine Halterung aufweisen, die einen reinseitigen Anschluss zum Abführen des gefilterten Mediums besitzt. Die Filtereinrichtung ist nun zur Durchführung eines Filtrationsbetriebs ausgestaltet, bei dem zumindest ein solches Ringfilterelement radial von außen nach innen von dem zu filternden Medium durchströmt wird. Des Weiteren ist die Filtereinrichtung zur Durchführung eines Regenerationsbetriebs ausgestaltet, bei dem zumindest ein solches Ringfilterelement radial von innen nach außen durchströmt wird. Während des Regenerationsbetriebs findet somit eine Rückspülung des jeweiligen Ringfilterelements statt. Die Rückspülung kann zweckmäßig mit dem gereinigten Medium erfolgen. Bevorzugt erfolgt die Rückspülung dabei unter einem erhöhten Druck, insbesondere impulsartig.

Die Filtereinrichtung kann insbesondere zur Gewinnung eines im zu filternden Medium mitgeführten Produkts ausgestaltet sein, z.B. in der Lebensmittelindustrie oder Pharmaindustrie. Bevorzugt ist das Produkt durch Festkörperpartikel gebildet, während das Medium ein Gas, vorzugsweise Luft ist. Ebenso ist denkbar, dass Medium eine Flüssigkeit ist. Ferner ist grundsätzlich auch die Separation eines flüssigen Produkts aus einem gasförmigen oder auch aus einem flüssigen Medium möglich. Während des Filtrationsbetriebs sammelt sich dieses Produkt an der Anströmseite des jeweiligen Ringfilterelements an. Durch den Regenerationsbetrieb kann das Produkt vom jeweiligen Ringfilterelement entfernt werden. Es sammelt sich dann an der Rohseite der Filtereinrichtung an und kann von dort leicht entfernt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Figuren anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Filtereinrichtung mit einem Ringfilterelement im Längsschnitt während eines Filtrationsbetriebs,
- Fig. 2: die Filtereinrichtung mit dem Ringfilterelement im Längsschnitt während eines Regenerationsbetriebs,
- Fig. 3: ein vergrößertes Detail III des Ringfilterelements aus Fig. 1,
- Fig. 4: einen Längsschnitt des Ringfilterelements in drei Schritten A, B und C während der Herstellung.

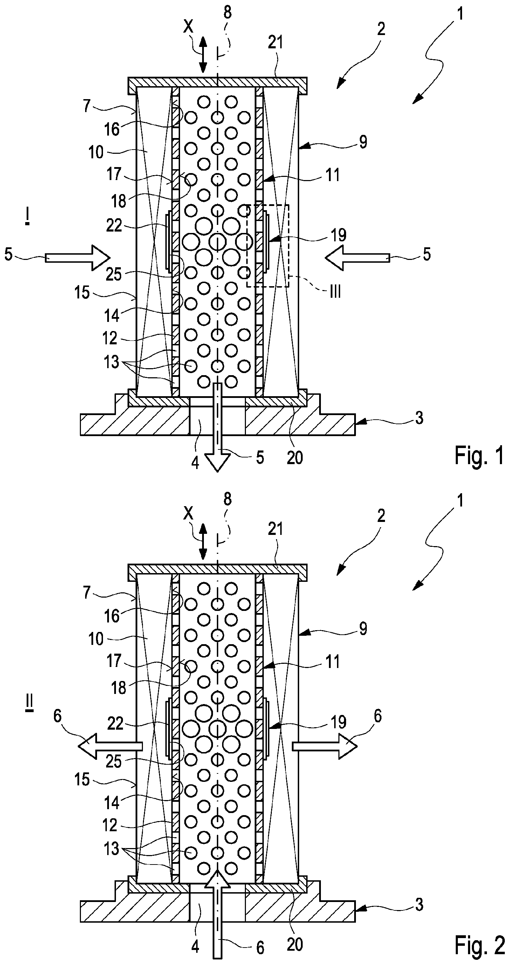

Entsprechend den Figuren 1 und 2 umfasst eine Filtereinrichtung 1, die zum Filtern eines flüssigen oder gasförmigen Mediums bzw. zum Herausfiltern eines vorzugsweise festen Produkts aus dem vorzugsweise gasförmigen Medium dient, zumindest ein Ringfilterelement 2, das zum Filtern des Mediums geeignet ist. Im gezeigten Beispiel ist nur ein einziges Ringfilterelement 2 gezeigt, es ist jedoch klar, dass auch zwei oder mehr Ringfilterelemente 2 in der Filtereinrichtung 1 angeordnet sein können, die dann zweckmäßig parallel vom Medium durchströmbar sind. Die Filtereinrichtung 1 umfasst außerdem zumindest eine Halterung 3 zum Aufnehmen des jeweiligen Ringfilterelements 2. Die Halterung 3 besitzt zumindest einen Anschluss 4, durch den das jeweilige Medium abhängig vom Betriebszustand der Filtereinrichtung 1 vom Ringfilterelement 2 abführbar bzw. dem Ringfilterelement 2 zuführbar ist.

Die Filtereinrichtung 1 ist zur Durchführung eines in Figur 1 angedeuteten Filtrationsbetriebs I ausgestaltet, der sich dadurch definiert, dass zumindest ein Ringfilterelement 2 vom zu filternden Medium radial von außen nach innen durchströmt wird. Die Durchströmung des Ringfilterelements 2 während des Filtrationsbetriebs I ist in Figur 1 durch Pfeile 5 angedeutet. Dabei wird das gefilterte Medium über den Anschluss 4 abgeführt.

Die Filtereinrichtung 1 ist außerdem zur Durchführung eines Regenerationsbetriebs II ausgestaltet, der sich dadurch charakterisiert, dass zumindest ein Ringfilterelement 2 radial von innen nach außen durchströmt wird. Die Durchströmung des Ringfilterelements 2 während des Regenerationsbetriebs II ist in Figur 2 durch Pfeile 6 angedeutet. Dabei wird ein Rückspülmedium, vorzugsweise gereinigtes Medium, über den Anschluss 4 zugeführt.

Während des Filtrationsbetriebs I werden Verunreinigungen, die auch als Produkt bezeichnet werden können und die im Medium mitgeführt werden, am Ringfilterelement 2 abgeschieden, wobei sie sich an einer Anströmseite 7 des Ringfilterelements 2 ansammeln. Während des Regenerationsbetriebs II erfolgt eine Rückspülung, vorzugsweise mit gereinigtem Medium und zweckmäßig mit erhöhtem Druck, wodurch die Anströmseite 7 des Ringfilterelements 2 von den Verunreinigungen bzw. vom Produkt befreit wird.

Das Ringfilterelement 2 ist zylindrisch bzw. zylinderförmig und besitzt demnach eine Längsmittelachse 8. Diese Längsmittelachse 8 definiert eine in den Figuren durch einen Doppelpfeil angedeutete Axialrichtung X. Die Axialrichtung X verläuft parallel zur Längsmittelachse 8. Die Radialrichtung verläuft senkrecht zur Axialrichtung X. Die Umfangsrichtung läuft um die Längsmittelachse 8 um.

Das Ringfilterelement 2 weist einen ringförmigen Filterkörper 9 aus einem Filtermaterial 10 auf. Der Filterkörper 9 ist vom Medium durchströmbar. Das Filtermaterial 10 kann zweckmäßig gefaltet sein. Insbesondere kann der Filterkörper 9 einen sogenannten Faltenstern bilden. Des Weiteren weist das Ringfilterelement 2 eine ringförmige Innenzarge 11 aus einem Stützmaterial auf. Die Innenzarge 11 ist dabei konzentrisch im Filterkörper 9 angeordnet und ist ebenfalls vom Medium durchströmbar. Hierzu kann die Innenzarge 11 eine Stützstruktur 12 aufweisen, die mehrere radiale Durchtrittsöffnungen 13 besitzt, wodurch die Stützstruktur 12 bzw. die Innenzarge 11 für das Medium durchströmbar ist. Das Stützmaterial der Innenzarge 11 selbst ist dagegen für das Medium undurchlässig. Die Durchströmung der Innenzarge 11 erfolgt demnach ausschließlich durch die Durchtrittsöffnungen 13.

Der Filterkörper 9 besitzt eine radial innenliegende Körperinnenseite 14 und eine radial außenliegende Körperaußenseite 15. Bei einem gefalteten Filtermaterial 10 wird die Körperinnenseite 14 durch die radial innenliegenden Falze gebildet, während die Körperaußenseite 15 durch die radial außenliegenden Falze gebildet ist. Bei einem gefalteten Filtermaterial 10 sind benachbarte Falten jeweils durch einen innenliegenden bzw. außenliegenden Falz miteinander verbunden. Die Anströmseite 7 des Filterkörpers 9 wird durch die außenliegende Oberfläche des Filtermaterials 10 gebildet. Eine Abströmseite 16 des Filterkörpers 9 wird durch die innenliegende Oberfläche des Filtermaterials 10 gebildet. Die Anströmseite 7 und die Abströmseite 16 beziehen sich dabei auf den Filtrationsbetrieb I und die damit einhergehende Durchströmungsrichtung von radial außen nach innen und schließen bei einem gefalteten Filtermaterial 10 die Oberflächen der Falten mit ein.

Die Innenzarge 11 weist eine radial außenliegende Zargenaußenseite 17 und eine radial innenliegende Zargeninnenseite 18 auf. Beim hier vorgestellten Ringfilterelement 2 liegt der Filterkörper 9 mit seiner Körperinnenseite 14 radial an der Zargenaußenseite 17 an. Diese radiale Anlage kann dabei im Wesentlichen über die gesamte axiale Erstreckung des Filterkörpers 9 und der Innenzarge 11 erfolgen. Diese Anlage ermögliche eine direkte radiale Abstützung. Im Bereich von weiter unten näher erläuterten Haltern 19 kann die radiale Abstützung dagegen indirekt erfolgen, nämlich über den jeweiligen Halter 19. Im Bereich des jeweiligen Halters 19 liegt der Filterkörper 9 am Halter 19 und gegebenenfalls nicht an der Innenzarge 11 an. Für den Filtrationsbetrieb I kann so der Filterkörper 9 die Druckdifferenz zwischen Anströmseite 7 und Abströmseite 16 an der Innenzarge 11 abstützen, wodurch das Filtermaterial 10 entlastet ist.

Das hier vorgestellte Ringfilterelement 2 ist außerdem mit wenigstens einem Halter 19 ausgestattet, der axial zwischen den axialen Enden des Filterkörpers 9 und der Innenzarge 11 angeordnet ist. Im gezeigten Beispiel besitzt das Ringfilterelement 2 an den axialen Enden des Filterkörpers 9 und der Innenzarge 11 jeweils eine Endscheibe, nämlich eine erste Endscheibe 20 und eine zweite Endscheibe 21. Die erste Endscheibe 20 ist dem Anschluss 4 der Halterung 3 zugewandt und kann als offene Endscheibe ausgestaltet sein. Die zweite Endscheibe 21 befindet sich dagegen an dem von dem Anschluss 4 abgewandten axialen Ende und kann als geschlossene Endscheibe ausgestaltet sein. Im gezeigten Beispiel ist das Ringfilterelement 2 nur mit einem einzigen Halter 19 ausgestattet. Es ist klar, dass auch zwei oder mehr derartige Haltere 19 vorgesehen sein können, die dann axial voneinander beabstandet angeordnet sind.

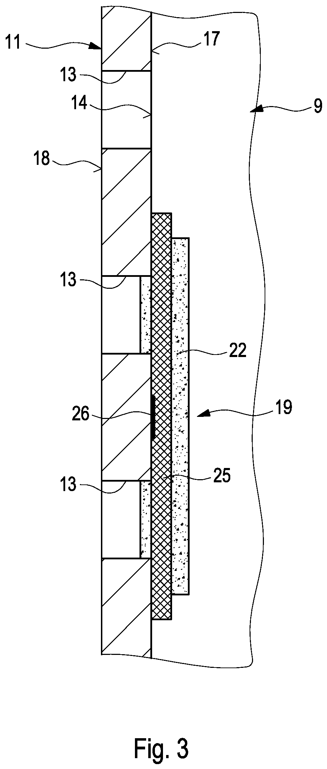

Fig. 3 zeigt einen vergrößerten Ausschnitt des geschnittenen Ringfilterelements 2 im Bereich eines solchen Halters 19. Entsprechend des Fig. 1 bis 3 weist der jeweilige Halter 19 einen Klebstoffkörper 22 auf, der aus einem ausgehärteten Klebstoff besteht. Dieser Klebstoffkörper 22 ist radial außen mit dem Filterkörper 9 fest verbunden. Grundsätzlich kann der Klebstoff des Klebstoffkörpers 22 gemäß Fig. 3 in einige der Durchtrittsöffnungen 13 der Innenzarge 11 eindringen, was einen Formschluss zwischen Klebstoffkörper 22 und Innenzarge 11 erzeugt. Denkbar ist auch, dass der Klebstoff einige Durchtrittsöffnungen 13 durchdringt, und zwar vorzugsweise derart, dass der Klebstoff dadurch die Stützstruktur 12 hintergreift. Im Einzelnen durchdringt dann der Klebstoff die jeweiligen Durchtrittsöffnung 13 radial und erstreckt sich an der Zargeninnenseite 18 in der Axialrichtung und in der Umfangsrichtung über einen Öffnungsrand der jeweiligen Durchtrittsöffnung 13 hinaus. Mit anderen Worten liegt dann der Klebstoffkörper 22 auch an der Zargeninnenseite 18 an und stützt sich daran ab. Hierdurch ergibt sich ein besonders intensiver Formschluss zwischen Klebstoffkörper 22 und Innenzarge 11.

Des Weiteren ist zweckmäßig vorgesehen, dass der Klebstoff an der Körperinnenseite 14 in das Filtermaterial 10 eindringt, so dass dort das Filtermaterial 10 in den Klebstoff eingebettet ist. Beispielsweise besitzt das Filtermaterial 10 eine Faserstruktur, die Poren ausbildet. Der Klebstoff dringt in diese Poren ein und hintergreift die Faserstruktur, so dass sich auch dort ein Formschluss ausgebildet. Insbesondere umgreift das Klebstoff eine Vielzahl von Fasern des Filtermaterials 10, wodurch das Filtermaterial 10 in den Klebstoff eingebettet wird. Dementsprechend ergibt sich auch hier eine feste und stabile Verbindung zwischen Klebstoffkörper 22 und Filterkörper 9.

Der Halter 19 sorgt somit für eine feste Anbindung der Körperinnenseite 14 an der Zargenaußenseite 17 und somit für eine feste Verbindung zwischen Filterkörper 9 und Innenzarge 11. Im gezeigten Beispiel erstreckt sich der Halter 19 in der Umfangsrichtung über wenigstens 360° und sorgt so für eine in der Umfangsrichtung vollständig umlaufende Anbindung zwischen Innenzarge 11 und Filterkörper 9. Beim gefalteten Filtermaterial 10 erstreckt sich der Halter 19 in der Umfangsrichtung und ist mit allen radial innenliegenden Falzen fest verbunden.

Besonders vorteilhaft ist die hier gezeigte Ausführungsform, bei welcher der Halter 19 ringförmig ausgestaltet ist und sich in der Umfangsrichtung erstreckt. Insbesondere kann der Halter 19 dabei wie gezeigt einen geschlossenen Ring bilden. Im Beispiel ist der ringförmige Halter 19 als Kreis geformt und liegt in einer senkrecht zur Längsmittelachse 8 des Ringfilterelements 2 verlaufenden Radialebene.

Gemäß den Fig. 1 bis 3 kann der Halter 19 wenigstens eine die Innenzarge 11 umgreifende ringförmige oder spiralförmige Armierung 25 aufweisen. Die Armierung 25 ist radial außen durch den Klebstoff des Klebstoffkörpers 22 direkt mit dem Klebstoffkörper 22 verklebt. Die Armierung 25 verstärkt den Halter 19 und kann hohe Kräfte aufnehmen. Sie kann aus Kunststoff oder aus Metall bestehen. Sie kann ringförmig vollständig umlaufen. Sie kann als geschlossener Ring ausgestaltet sein. Die Armierung 25 besitzt vorzugsweise eine Gitterstruktur, so dass sie für den Klebstoff durchlässig ist, solange dieser nicht ausgehärtet und fließfähig ist. Die Armierung 25 kann dadurch in den Klebstoff des Klebstoffkörpers 22 eingebettet sein, also vom Klebstoff durchdrungen sein. Gemäß Fig. 3 kann der Klebstoff des Klebstoffkörpers 22 radial innen durch die Armierung 25 hindurch bis zur Innenzarge 11 gelangen und dort direkt mit der Innenzarge 11 verklebt sein. Damit ist der Halter 19 durch den Klebstoffkörper 22 radial innen mit der Innenzarge 11v und radial außen mit dem Filterkörper 9 verklebt, während er in seinem Inneren, also radial zwischen der Innenzarge 11 und dem Filterkörper 9 durch die Armierung 25 verstärkt ist.

Besonders vorteilhaft ist eine Ausgestaltung, bei der die Armierung 25 an der Innenzarge 11 unabhängig vom Klebstoff direkt befestigt ist. Dies kann beispielsweise durch wenigstens eine Schweißverbindung 26 erfolgen, die in Fig. 3 angedeutet ist. In diesem Fall sind die Innenzarge 9 und der Halter 19 aus ähnlichen oder gleichen Materialien hergestellt, z.B. jeweils Kunststoff oder jeweils Metall. Alternativ ist auch eine Lötverbindung oder eine Verbindung mit wenigstens einem mechanischen Befestigungselement denkbar, wie z.B. ein Clip oder eine Klammer. Hierdurch lässt sich die Montage des Ringfilterelements 2 vereinfachen, da der Halter 19 mittels der an der Innenzarge 11 fixierten Armierung 25 an der Innenzarge 11 axial fixierbar ist bevor der Klebstoff aktiviert und/oder ausgehärtet ist. Beispielsweise lässt sich der Filterkörper 9 leichter auf die Innenzarge 11 mit Halter 19 aufschieben solange der Klebstoff nicht aktiviert ist.

Bevorzugt ist eine Ausführungsform, bei der sich der jeweilige Klebstoffkörper 22 nur über einen Teil der axialen Länge der Innenzarge 11 erstreckt. Die Armierung 25 kann sich grundsätzlich über die gesamte axiale Länge der Innenzarge 11 erstrecken. Bevorzugt erstreckt sich die Armierung 25 wie in den gezeigten Beispielen jedoch nur im Bereich des jeweiligen Klebstoffkörper 22, also über einen Teil der axialen Länge der Innenzarge 11.

Das hier vorgestellte Ringfilterelement 2 charakterisiert sich somit durch wenigstens einen innenliegenden Halter 19, wobei sich der Begriff "innenliegend" auf die Anordnung des Halters 19 an der Abströmseite 16 des Filterkörpers 9 während des Filtrationsbetriebs I bezieht. Hierdurch kann der Halter 19 nicht mit den im Medium mitgeführten Verunreinigungen bzw. mit dem im Medium mitgeführten Produkt in Kontakt kommen. Der innenliegende Halter 19 ist dabei quasi radial zwischen dem Filterkörper 9 und der Innenzarge 11 angeordnet.

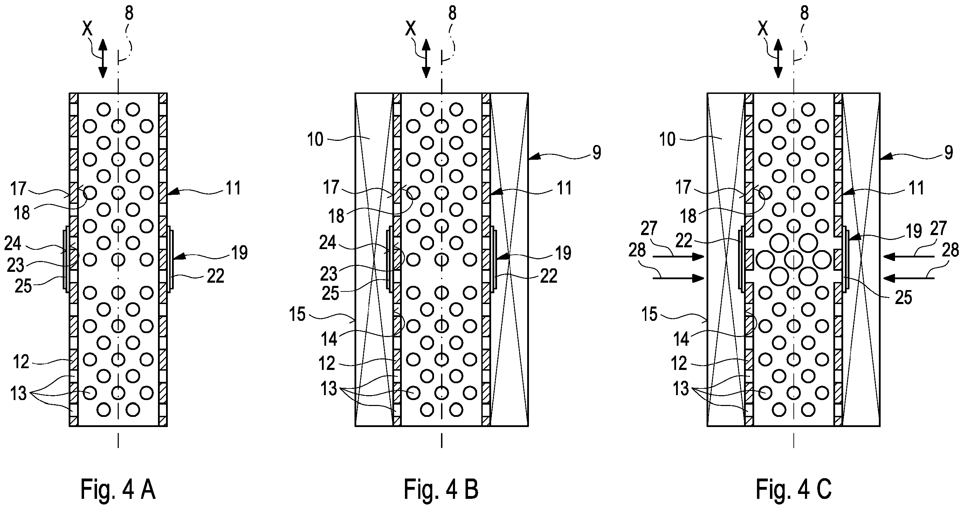

Nachfolgend wird anhand der Figuren 4A, 4B und 4C ein Verfahren zum Herstellen eines derartigen Ringfilterelements 2 vorgestellt.

Zunächst wird in einem Schritt A gemäß Figur 4A der wenigstens eine Halter 19 an der Zargenaußenseite 17 festgelegt. Hierbei ist der Klebstoff des Klebstoffkörpers 22 noch nicht aktiviert und befindet sich somit in einem Ausgangszustand oder Rohzustand. In diesem Ausgangszustand kann der Klebstoff flüssig, vorzugsweise zähflüssig sein. Der jeweilige Halter 19 kann beispielsweise als endloses Bandmaterial bereitgestellt werden. Der Halter 19 kann selbsthaftend ausgestaltet sein, so dass er an der Zargenaußenseite 17 selbsttätig haftet. Beispielsweise kann der Halter 19 zumindest an seiner der Innenzarge 11 zugewandten radialen Innenseite 23 haftend oder klebend ausgestaltet sein. Zur vereinfachten Handhabung und Montage des Halters 19 kann eine von der Innenzarge 11 abgewandte radiale Außenseite 24 des Halters 19 dagegen nicht haftend bzw. nicht klebend ausgestaltet sein. Vorzugsweise besitzt der Klebstoff im Ausgangszustand eine adhäsive Oberfläche, die zum Ankleben des Halters 19 an der Innenzarge 12 bzw. an der Armierung 25 genutzt werden kann. Zweckmäßig kann die radiale Außenseite 24 des Halters 19 bezüglich der Klebewirkung deaktiviert sein. Beispielsweise kann die Oberfläche des Klebstoffs an der Außenseite 24 mit einer nicht haftenden Beschichtung, also mit einer Antihaftbeschichtung versehen bzw. versiegelt sein. Beispielsweise kann die Antihaftbeschichtung als Wachsbeschichtung ausgestaltet sein, die eine kleine Schichtdicke, insbesondere weniger als 10µm, aufweisen kann.

Sofern wie hier die Armierung 25 zum Einsatz kommt, kann der Halter 19 mit dieser Armierung 25 vorkonfektioniert sein. Dann lässt sich der Halter 19 durch Fixieren der Armierung 25 an der Innenzarge 11 in der gewünschten Position festlegen. Es ist klar, dass dann die Schweißverbindung 26 außerhalb des Klebstoffkörpers 22 liegt. Alternativ lässt sich der Halter 19 auch an der Innenzarge 11 aufbauen, indem zunächst die Armierung 25 an der Innenzarge 11 angebracht und fixiert wird und anschließend der Klebstoffkörper 22 an der Armierung 25 angeordnet wird.

In einem Schritt B werden gemäß Figur 4B der Filterkörper 9 und die Innenzarge 11 ineinandergesteckt, derart, dass die Körperinnenseite 14 zumindest am jeweiligen Halter 19 anliegt. Da das Filtermaterial 10 üblicherweise eine gewisse Elastizität besitzt, können die Abmessungen von Innenzarge 11 und Filterkörper 9 so aufeinander abgestimmt sein, dass der Filterkörper 9 an der Körperinnenseite 14 im Wesentlichen über die gesamte axiale Länge an der Innenzarge 11 bzw. am jeweiligen Halter 19 anliegt. Es ist klar, dass am Übergang zwischen Innenzarge 11 und dem jeweiligen Halter 19 Lücken entstehen können, in denen die Körperinnenseite 14 weder an der Innenzarge 11, noch am jeweiligen Halter 19 anliegt. Das Stecken von Filterkörper 9 und Innenzarge 11 kann so erfolgen, dass der Filterkörper 9 auf die Innenzarge 11 aufgesteckt wird. Ebenso kann die Innenzarge 11 in den Filterkörper 9 eingesteckt werden.

In einem Schritt C erfolgt nun gemäß Figur 4C eine Aktivierung des Klebstoffs, so dass dieser aushärtet und sich in der Folge fest mit dem Filterkörper 9 verbindet. Für eine optimale Verbindung des Klebstoffs mit dem Filterkörper 9 und gegebenenfalls mit der Armierung 25 und insbesondere auch mit der Innenzarge 11 kann der Filterkörper 9 vor und während des Härtevorgangs des Klebstoffs radial gegen die Innenzarge 11 und gegebenenfalls gegen die Armierung 25 angedrückt werden. Diese Druckbeaufschlagung ist in Fig. 4C durch Pfeile 27 angedeutet. Vor dem Aushärten ist der Klebstoff quasi fließfähig und verdrängbar, so dass bei einem gefalteten Filtermaterial 10 die innenliegenden Falze in den Klebstoff eingedrückt werden können. Wie bereits vorstehend erläutert, kann der Klebstoff vor dem Aushärten auch in die gegebenenfalls vorhandene Armierung 25 eindringen. Ebenso ist denkbar, dass der Klebstoff die Armierung 25 durchdringt und bis zur Innenzarge 11 genagt. Auch kann der Klebstoff in einige der Durchtrittsöffnungen 13 eindringen und diese im Extremfall auch durchdringen und sich an der Zargeninnenseite 18 weiter ausbreiten, und zwar insbesondere auch in der Umfangsrichtung und in der Axialrichtung X. Außerdem kann der Klebstoff in das Filtermaterial 10 eintreten, wodurch letztlich das Filtermaterial 10 in den Klebstoff eingebettet wird.

Die Aktivierung des Klebstoffs kann auf beliebige geeignete Weise erfolgen, kann jedoch vom verwendeten Klebstoff abhängen. Bevorzugt ist eine Ausführungsform, bei der ein mit Wasser aktivierbarer Klebstoff verwendet wird. Hierzu kann die Baugruppe, die zumindest die Innenzarge 11, den jeweiligen Halter 19 und den Filterkörper 9 umfasst, z.B. mit Wasserdampf beaufschlagt werden. Diese Dampfbeaufschlagung ist in Fig. 4C durch Pfeile 28 angedeutet.

## Patentansprüche

1. Ringfilterelement (2) zum Filtern eines flüssigen oder gasförmigen Mediums,
- mit einem ringförmigen Filterkörper (9) aus einem Filtermaterial (10), der vom Medium durchströmbar ist, und
- mit einer ringförmigen Innenzarge (11) aus einem Stützmaterial, die konzentrisch im Filterkörper (9) angeordnet ist und die vom Medium durchströmbar ist,
- wobei sich der Filterkörper (9) mit seiner radial innenliegenden Körperinnenseite (14) radial an einer radial außenliegenden, zylindrischen Zargenaußenseite (17) direkt oder indirekt abstützt, wenn er bei einer Durchströmung von radial außen nach innen gegen die Innenzarge (11) gedrückt wird,
- wobei das Ringfilterelement (2) wenigstens einen die Innenzarge (11) umgreifenden ringförmigen oder spiralförmigen Halter (19) aufweist, der an der Körperinnenseite (14) angeordnet ist,
- wobei der Halter (19) einen ringförmigen oder spiralförmigen Klebstoffkörper (22) aus einem Klebstoff aufweist,
- wobei der Klebstoffkörper (22) radial außen durch den Klebstoff des Klebstoffkörpers (22) direkt mit dem Filterkörper (9) verklebt ist, und
- wobei der Halter (19) radial innen an der Innenzarge (11) radial gehalten ist,
- wobei der Halter (19) wenigstens eine die Innenzarge (11) umgreifende ringförmige oder spiralförmige Armierung (25) aufweist, die durch den Klebstoff des Klebstoffkörpers (22) direkt mit dem Klebstoffkörper (22) verklebt ist,
**dadurch gekennzeichnet,**
**dass** die Armierung (25) eine Gitterstruktur aufweist, die vom Klebstoff des Klebstoffkörpers (22) durchsetzt ist, so dass der Klebstoffkörper (22) radial innen durch den Klebstoff des Klebstoffkörpers (22) durch die Armierung (25) hindurch direkt mit der Innenzarge (11) verklebt ist.

2. Ringfilterelement (2) nach Anspruch 1,
**dadurch gekennzeichnet,**
**dass** die Armierung (25) an der Innenzarge (11) unabhängig vom Klebstoff direkt befestigt ist.

3. Ringfilterelement (2) nach Anspruch 1 oder 2,
**dadurch gekennzeichnet,**
**dass** die Armierung (25) mit einem Metallgitter gebildet ist.

4. Ringfilterelement (2) nach einem der Ansprüche 1 bis 3,
**dadurch gekennzeichnet,**
- **dass** sich der jeweilige Klebstoffkörper (22) nur über einen Teil der axialen Länge der Innenzarge (11) erstreckt,
- **dass** sich die Armierung (25) entweder über die gesamte axiale Länge der Innenzarge (11) oder nur im Bereich des jeweiligen Klebstoffkörper (22) über einen Teil der axialen Länge der Innenzarge (11) erstreckt.

5. Ringfilterelement (2) nach einem der vorhergehenden Ansprüche,
**dadurch gekennzeichnet,**
- **dass** die Innenzarge (11) eine Stützstruktur (12) mit radialen Durchtrittsöffnungen (13) aufweist, die vom Medium durchströmbar sind,
- **dass** der Klebstoff in einige dieser Durchtrittsöffnungen (13) zumindest teilweise eindringt.

6. Ringfilterelement (2) nach einem der vorhergehenden Ansprüche,
**dadurch gekennzeichnet,**
**dass** sich jeder Halter (19) oder wenigstens ein solcher Halter (19) in der Umfangsrichtung über wenigstens 360° erstreckt.

7. Ringfilterelement (2) nach einem der vorhergehenden Ansprüche,
**dadurch gekennzeichnet,**
**dass** sich der jeweilige Halter (19) nur über einen Teil der axialen Länge der Innenzarge (11) erstreckt.

8. Ringfilterelement (2) nach einem der vorhergehenden Ansprüche,
**dadurch gekennzeichnet,**
- **dass** das Filtermaterial (10) gefaltet ist, wobei benachbarte Falten jeweils durch einen Falz miteinander verbunden sind,
- **dass** sich jeder Halter (19) oder wenigstens ein solcher Halter (19) ringförmig oder spiralförmig in der Umfangsrichtung erstreckt und mit allen radial innenliegenden Falzen fest verbunden ist.

9. Verfahren zum Herstellen eines Ringfilterelements (2) nach einem der vorhergehenden Ansprüche,
mit folgenden Schritten:
A: Festlegen wenigstens eines Halters (19) an der Zargenaußenseite (17), wobei der Klebstoff noch nicht ausgehärtet ist,
B: Anordnen des Filterkörpers (9) und der Innenzarge (11) aneinander, so dass die Körperinnenseite (14) zumindest am jeweiligen Halter (19) anliegt,
C: Aktivieren des Klebstoffes, so dass dieser aushärtet und sich dadurch mit dem Filterkörper (9) fest verbindet,
**dadurch gekennzeichnet,**
**dass** während Schritt B und/oder während Schritt C das Filtermaterial (10) radial gegen die Innenzarge (11) angedrückt wird, derart, dass der Klebstoff des Klebstoffkörpers (22) in das Filtermaterial (10) eindringt und/oder in die Gitterstruktur der Armierung (25) eindringt und/oder die Gitterstruktur der Armierung (25) durchdringt und mit der Innenzarge (11) in Kontakt kommt.

10. Verfahren nach Anspruch 9,
**dadurch gekennzeichnet,**
- **dass** zum Festlegen des jeweiligen Halters (19) in Schritt A die Armierung (25) an der Innenzarge (11) befestigt wird, und/oder
- **dass** während Schritt B und/oder während Schritt C das Filtermaterial (10) radial gegen die Innenzarge (11) angedrückt wird, und/oder
- **dass** der Klebstoff zumindest in Schritt B zähflüssig ist.

11. Verfahren nach Anspruch 9 oder 10,
**dadurch gekennzeichnet,**
**dass** die Aktivierung in Schritt C durch die Beaufschlagung des Halters (19) mit Wasserdampf erfolgt.

12. Filtereinrichtung (1) zum Filtern eines flüssigen oder gasförmigen Mediums,
- mit wenigstens einem Ringfilterelement (2) nach einem der Ansprüche 1 bis 8,
- wobei die Filtereinrichtung (1) zur Durchführung eines Filtrationsbetriebs (I) ausgestaltet ist, bei dem zumindest ein Ringfilterelement (2) radial von außen nach innen von dem zu filternden Medium durchströmt wird,
- wobei die Filtereinrichtung (1) zur Durchführung eines Regenerationsbetriebs (II) ausgestaltet ist, bei dem zumindest ein Ringfilterelement (2) radial von innen nach außen durchströmt wird.

## Claims

1. Ring filter element (2) for filtering a liquid or gaseous medium,
- with an annular filter body (9) made of a filter material (10) through which the medium can flow, and
- with an annular inner frame (11) made of a supporting material, which is arranged concentrically in the filter body (9) and through which the medium can flow,
- wherein the filter body (9) is supported directly or indirectly with its radially inner body inner side (14) radially against a radially outer cylindrical frame outer side (17) when it is pressed from radially outside to inside against the inner frame (11) during a flow,
- wherein the ring filter element (2) has at least one annular or spiral holder (19) which surrounds the inner frame (11) and is arranged on the inner side (14) of the body,
- wherein the holder (19) has an annular or spiral adhesive body (22) made of an adhesive,
- wherein the adhesive body (22) is radially outwardly directly bonded to the filter body (9) by the adhesive of the adhesive body (22), and
- wherein the holder (19) is radially held on the radial inside of the inner frame (11),
- wherein the holder (19) has at least one annular or spiral reinforcement (25) that surrounds the inner frame (11) and is bonded directly to the adhesive body (22) by the adhesive of the adhesive body (22), **characterised in that**
the reinforcement (25) has a lattice structure through which the adhesive of the adhesive body (22) is interspersed, so that the adhesive body (22) is radially internally bonded directly to the inner frame (11) through the adhesive of the adhesive body (22), through the reinforcement (25).

2. Ring filter element (2) according to claim 1,
**characterised in that**
the reinforcement (25) is directly fixed to the inner frame (11) independently of the adhesive.

3. Ring filter element (2) according to claim 1 or 2,
**characterised in that**
the reinforcement (25) is formed with a metal grid.

4. Ring filter element (2) according any one of claims 1 to 3,
**characterised in that**
- the respective adhesive body (22) extends over only part of the axial length of the inner frame (11),
- the reinforcement (25) extends either over the entire axial length of the inner frame (11) or only in the region of the respective adhesive body (22) over part of the axial length of the inner frame (11).

5. Ring filter element (2) according to any one of the preceding claims,
**characterised in that**
- the inner frame (11) has a support structure (12) with radial openings (13) through which the medium can flow,
- the adhesive penetrates at least partially into some of these openings (13).

6. Ring filter element (2) according to any one of the preceding claims,
**characterised in that**
each holder (19) or at least one such holder (19) extends over at least 360° in the circumferential direction.

7. Ring filter element (2) according to any one of the preceding claims,
**characterised in that**
the respective holder (19) only extends over part of the axial length of the inner frame (11).

8. Ring filter element (2) according to any one of the preceding claims,
**characterised in that**
- the filter material (10) is pleated, wherein adjacent pleats are connected to one another in each case by a fold,
- each holder (19) or at least one such holder (19) extends annularly or spirally in the circumferential direction and is fixedly connected to all radially inner folds.

9. Method of manufacturing a ring filter element (2) according to any one of the preceding claims,
comprising the following steps:
A: fixing at least one holder (19) to the outer side of the frame (17), the adhesive not yet having cured,
B: arranging the filter body (9) and the inner frame (11) against one another such that the body inner side (14) rests on at least the respective holder (19),
C: activating the adhesive so that it cures and thereby bonds fixedly to the filter body (9),
**characterised in that**
during step B and/or during step C, the filter material (10) is pressed radially against the inner frame (11) in such a way that the adhesive of the adhesive body (22) penetrates into the filter material (10) and/or penetrates into the lattice structure of the reinforcement (25) and/or penetrates the lattice structure of the reinforcement (25) and comes into contact with the inner frame (11).

10. Method according to claim 9,
**characterised in that**
- for fixing the respective holder (19) in step A, the reinforcement (25) is fixed to the inner frame (11), and/or
- during step B and/or during step C the filter material (10) is pressed radially against the inner frame (11), and/or
- the adhesive is viscous in at least step B.

11. Method according to claim 9 or 10,
**characterised in that**
the activation in step C takes place by exposing the holder (19) to water vapour.

12. Filter device (1) for filtering a liquid or gaseous medium,
- comprising at least one ring filter element (2) according to any one of claims 1 to 8,
- wherein the filter device (1) is designed to carry out a filtration operation (I) in which the medium to be filtered flows through at least one ring filter element (2) radially from the outside to the inside,
- wherein the filter device (1) is designed to carry out a regeneration operation (II) in which flow takes place through at least one ring filter element (2) radially from the inside to the outside.

## Revendications

1. Élément de filtre annulaire (2) pour la filtration d'un milieu liquide ou gazeux,
- avec un corps de filtre (9) annulaire en un matériau de filtre (10) qui peut être traversé par le milieu, et
- avec un cadre intérieur (11) annulaire en un matériau d'appui qui est agencé de manière concentrique dans le corps de filtre (9) et qui peut être traversé par le milieu,
- dans lequel le corps de filtre (9) s'appuie radialement avec son côté intérieur de corps (14) situé radialement à l'intérieur sur un côté extérieur de cadre (17) cylindrique situé radialement à l'extérieur, directement ou indirectement, lorsqu'il est pressé contre le cadre intérieur (11) lors d'un écoulement de l'extérieur radialement vers l'intérieur,
- dans lequel l'élément de filtre annulaire (2) présente au moins un support annulaire ou en forme de spirale (19) entourant le cadre intérieur (11), qui est agencé sur le côté intérieur du corps (14),
- dans lequel le support (19) présente un corps adhésif (22) annulaire ou en forme de spirale constitué d'un adhésif,
- dans lequel le corps adhésif (22) est collé radialement vers l'extérieur directement au corps de filtre (9) par l'adhésif du corps adhésif (22), et
- dans lequel le support (19) est maintenu radialement à l'intérieur du cadre intérieur (11),
- dans lequel le support (19) présente au moins une armature (25) annulaire ou en forme de spirale entourant le cadre intérieur (11), qui est collée directement au corps adhésif (22) par l'adhésif du corps adhésif (22), **caractérisé en ce que**
l'armature (25) présente une structure en grille qui est traversée par l'adhésif du corps adhésif (22), de sorte que le corps adhésif (22) est collé radialement à l'intérieur par l'adhésif du corps adhésif (22) à travers l'armature (25) directement sur le cadre intérieur (11).

2. Élément de filtre annulaire (2) selon la revendication 1,
**caractérisé en ce que**
l'armature (25) est fixée directement au cadre intérieur (11) indépendamment de l'adhésif.

3. Élément de filtre annulaire (2) selon la revendication 1 ou 2,
**caractérisé en ce que**
l'armature (25) est formée avec une grille métallique.

4. Élément de filtre annulaire (2) selon l'une quelconque des revendications 1 à 3,
**caractérisé en ce que**
- le corps adhésif (22) respectif ne s'étend que sur une partie de la longueur axiale du cadre intérieur (11),
- **en ce que** l'armature (25) s'étend soit sur toute la longueur axiale du cadre intérieur (11), soit seulement dans la zone du corps adhésif (22) respectif sur une partie de la longueur axiale du cadre intérieur (11).

5. Élément de filtre annulaire (2) selon l'une quelconque des revendications précédentes,
**caractérisé en ce que**
- le cadre intérieur (11) présente une structure d'appui (12) avec des ouvertures de passage (13) radiales qui peuvent être traversées par le milieu,
- l'adhésif pénètre au moins partiellement dans certaines de ces ouvertures de passage (13).

6. Élément de filtre annulaire (2) selon l'une quelconque des revendications précédentes,
**caractérisé en ce que**
**que** chaque support (19) ou au moins un tel support (19) s'étend dans le sens périphérique sur au moins 360°.

7. Élément de filtre annulaire (2) selon l'une quelconque des revendications précédentes,
**caractérisé en ce que**
le support (19) respectif ne s'étend que sur une partie de la longueur axiale du cadre intérieur (11).

8. Élément de filtre annulaire (2) selon l'une quelconque des revendications précédentes,
**caractérisé en ce que**
- le matériau de filtre (10) est plié, dans lequel des plis contigus sont reliés entre eux respectivement par une rainure,
- que chaque support (19) ou au moins un tel support (19) s'étend annulairement ou en forme de spirale dans le sens périphérique et est fixement relié à toutes les rainures radialement intérieures.

9. Procédé de fabrication d'un élément filtrant annulaire (2) selon l'une quelconque des revendications précédentes,
en suivant les étapes suivantes consistant à :
A : fixer au moins un support (19) au côté extérieur de cadre (17), dans lequel l'adhésif n'a pas encore durci,
B : agencer le corps de filtre (9) et le cadre intérieur (11) l'un au niveau de l'autre de sorte que le côté intérieur de corps (14) repose au moins contre le support (19) respectif,
C : Activer l'adhésif de sorte qu'il durcisse et se lie ainsi fixement au corps de filtre (9),
**caractérisé en ce que**
pendant l'étape B et/ou pendant l'étape C, le matériau filtrant (10) est pressé radialement contre le cadre intérieur (11) de sorte que l'adhésif du corps adhésif (22) pénètre dans le matériau filtrant (10) et/ou pénètre dans la structure en grille de l'armature (25) et/ou traverse la structure en grille de l'armature (25) et vient en contact avec le cadre intérieur (11).

10. Procédé selon la revendication 9,
**caractérisé en ce que**
- pour fixer le support (19) respectif à l'étape A, l'armature (25) est fixée au cadre intérieur (11), et/ou
- pendant l'étape B et/ou pendant l'étape C, le matériau filtrant (10) est pressé radialement contre le cadre intérieur (11), et/ou
- l'adhésif est visqueux au moins à l'étape B.

11. Procédé selon la revendication 9 ou 10,
**caractérisé en ce que**
l'activation à l'étape C s'effectue par l'exposition du support (19) à de la vapeur d'eau.

12. Dispositif de filtre (1) pour la filtration d'un milieu liquide ou gazeux,
- avec au moins un élément de filtre annulaire (2) selon l'une quelconque des revendications 1 à 8,
- dans lequel le dispositif de filtre (1) est configuré pour la réalisation d'un fonctionnement de filtration (I)
pour lequel au moins un élément de filtre annulaire (2) est traversé radialement de l'extérieur vers l'intérieur par le milieu à filtrer,
- dans lequel le dispositif de filtre (1) est configuré pour la réalisation d'un fonctionnement de régénération (II), pour lequel au moins un élément de filtre annulaire (2) est traversé radialement de l'intérieur vers l'extérieur.
